# EUROPEAN PATENT APPLICATION

(11) **EP 2 599 743 A2**
(43) Date of publication of application: **05.06.2013**
(21) Application number: 12194926.7
(22) Date of filing: 29.11.2012
(51) Int. Cl.: B67C 3/22, B65B 59/04

(54) **Machine protection device, in particular for a container handling machine**

(30) Priority: 29.11.2011 IT TO20111097
(71) Applicant: Sidel S.p.a. Con Socio Unico, Parma (IT)
(72) Inventor: Galotto, Vincenzo, 43100 PARMA (IT)
(74) Representative: Bergadano, Mirko

(57) **Abstract**

A machine protection device (1), in particular for a container handling machine (2), is provided with a support frame (3), which has a succession of uprights (4) and crossbars (5) and supports a plurality of vertical panels (20) arranged between the uprights (4); the support frame (3) is provided with fastening devices (33), at least one of which has an insert (34) defining a threaded hole (38) and fixed by way of plastic deformation to an upright or crossbar.

## Description

The present invention relates to a machine protection device, in particular for a container handling machine.

As known, for security reasons around the machines it is necessary to provide a barrier, which is usually formed by a metal frame and a plurality of transparent panels, supported by uprights of the frame.

To secure the various components (brackets for supporting panels, door hinges, crossbars, etc...) to the uprights, the known solutions provide connecting elements welded onto the external walls of the uprights. Said connecting elements are, for example, defined by threaded stems, which frontally protrude with respect to the uprights walls and engage respective holes provided in the components to be coupled. Said components are then bolted by nuts screwed to the threaded stems. For example, other known connecting elements are defined by nut-screws, which are arranged in fixed positions behind plates defining the uprights and therefore protruding from the back with respect to said plates.

The solutions of the type just described are hardly satisfactory, since the protruding parts and/or the welds define areas that cannot be easily cleaned. In addition, the welds require high costs and time for assembling the protection device.

Another factor that may hinder the cleaning is defined by possible cables or pipes arranged around the machine. In patent US6848236, the frame has a series of crossbars, which are provided with horizontal channels, brackets and nozzles arranged on the inner side, i.e. towards the machine. Said channels can support cables and/or pipes.

However, said cables and/or pipes are not protected on their way to and from the machine, and, as mentioned above, may be the cause of difficulties in cleaning the area around the machine and the protection device.

The aim of the present invention is to achieve a machine protection device, in particular for a container processing machine, which will allow to solve in a simple and economic way the problems outlined above.

According to the present invention a machine protection device is made, in particular for a container handling machine, as defined in claim 1.

According to the present invention a machine protection device is further provided, in particular for a container handling machine, as defined in claim 14.

The invention will now be described with reference to annexed drawings, which illustrate a non limitative embodiment, in which:
- Figure 1 is a perspective view that shows, with parts removed for clarity, a preferred embodiment of a machine protection device, in particular for a container handling machine, according to the present invention;
- Figure 2 illustrates, in perspective and in enlarged scale, a detail of the protection device of figure 1;
- Figure 3 is a different perspective view showing, in further enlarged scale, connecting devices in an inner area of the protection device of figure 2;
- Figure 4 shows a hinge of the protection device of Figure 2;
- Figure 5 is a cross section of a connecting device, according to the section line V-V of Figure 3;
- Figure 6 is a cross section according to the section line VI-VI of Figure 2 and schematically shows the detail of Figure 2;
- Figure 7 is an enlargement of a detail of Figure 6; and
- Figure 8 is a rear perspective view showing, on an enlarged scale, a component visible in Figure 2.

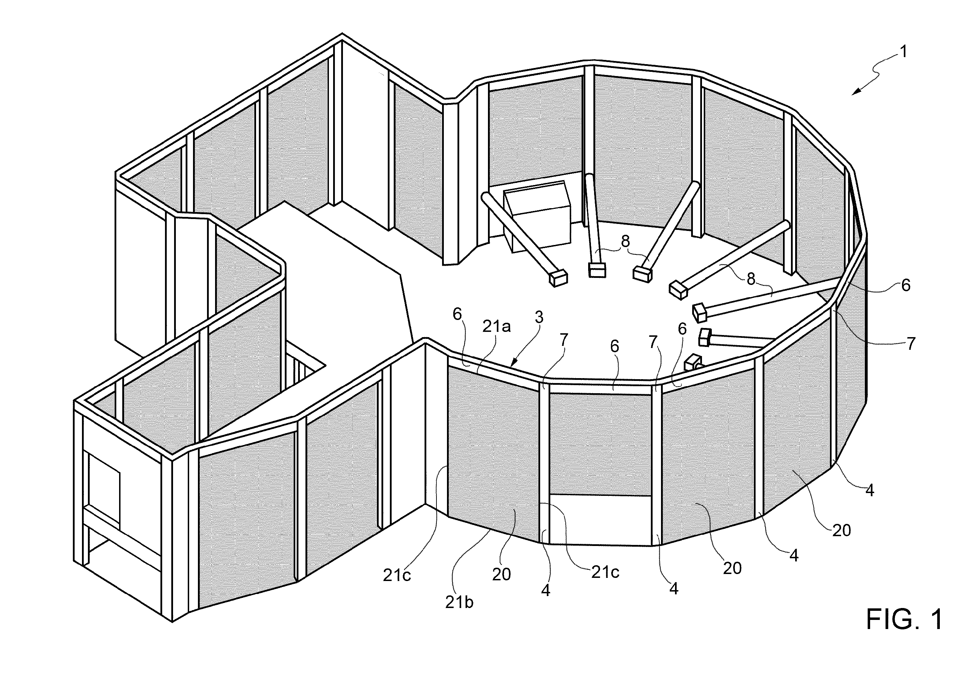

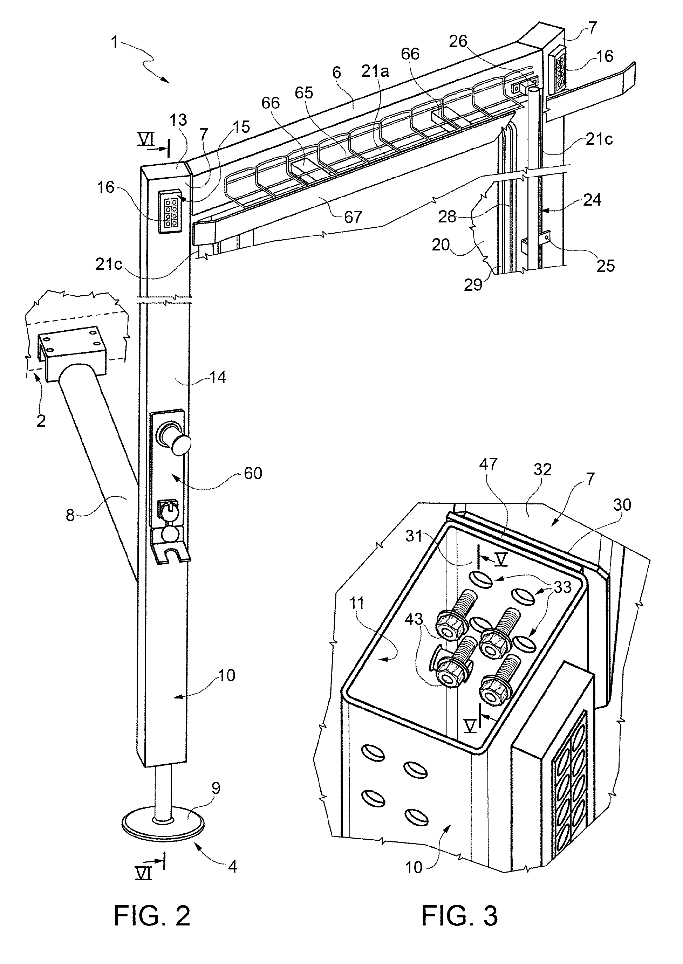

In Figure 1, reference number 1 refers to a protection device, which is arranged around a machine 2 (partially shown in dashed line in figure 2), for example a container handling machine, i.e. a filler, a capper, a labeler, etc.

The device 1 is part of a protection structure that can completely enclose the machine, even from above, since it has an upper cover (not shown) as an optional element.

The device 1 comprises a support frame 3, which comprises a series of uprights 4 arranged in spaced positions one from the other on a floor 5, particularly along a closed annular path, which in turn is spaced from the outer perimeter of the machine 2.

The support frame 3 also comprises a plurality of crossbars 6, fixed to the upper ends 7 of the uprights 4, and a plurality of arms 8, which extend cantilevered from some of the uprights 4 towards the machine 2, work as a support on the uprights 4 and keep them at a constant and uniform distance from the base of the machine 2.

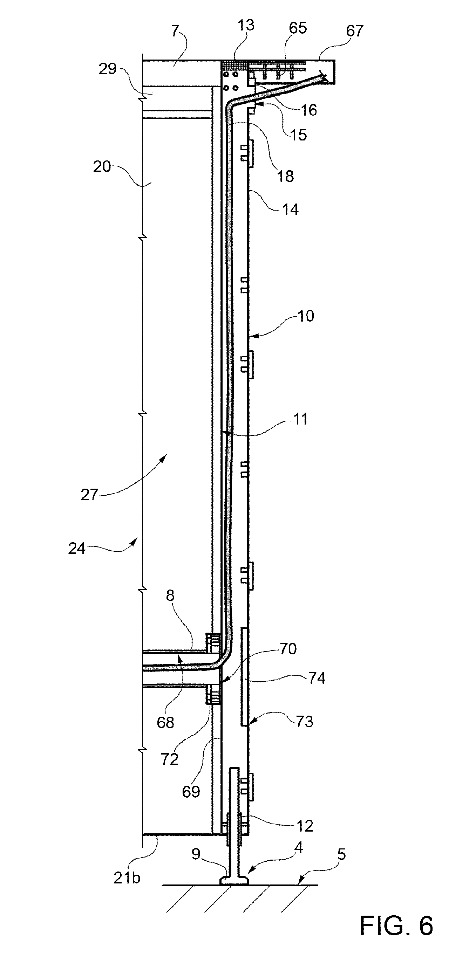

With reference to Figure 2, the uprights 4 comprise respective feet 9 laying on the floor 5, and respective tubular bars 10, i.e. bars that have a closed cross section and therefore define respective vertical cavities or passages 11 (Figures 3 and 6). Preferably, the cavities 11 are substantially isolated with respect to the outside surroundings, possibly except for their lower ends, where the tubular bars 10 are connected to the feet 9 by adjustable coupling systems 12 (Fig. 6), of a known type and not described in detail, for example by screw and nut-screw couplings, to finely adjust the height position of the tubular bars 10 during assembly of the device 1.

The tubular bars 10 are closed at the top, preferably hermetically, by lids 13. The lids 13 are removable to allow access to the cavity 11 from above: for example, they are made of plastic and are pressure or snap-coupled.

On the outer side with respect to machine 2, the tubular bars 10 comprise respective front walls 14, which have, at or near the ends 7, respective openings 15. The openings 15 are engaged by cable-guide devices 16 which are used to enter/exit the cable 18 (Figure 6) in the cavities 11 and substantially provide a fluid-tight seal around the cables 18 for preventing the entry of cleaning fluids inside of the uprights 4.

Returning to Figure 1, the uprights 4 support a series of vertical transparent panels 20, defined for example by tempered glass panes. The panels 20 are substantially aligned and close at least partially the spaces between the uprights 4 to form, with the uprights 4, a side barrier for the machine 2. Some of the panels 20 have a limited height to allow the passing of pipes (not shown) through a metal sheet.

The panels 20 are without an external frame, therefore the upper edge 21a, the bottom edge 21b and the side edges 21c of each panel 20 are free and accessible, allowing for effective cleaning.

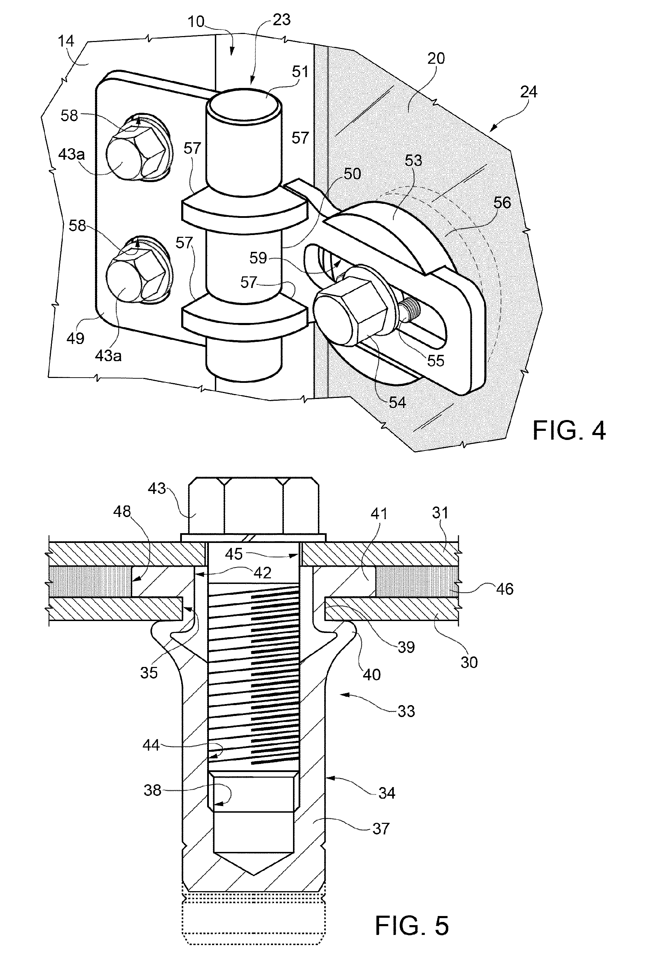

Some panels are fixed to the uprights 20 by way of brackets 4 (not shown). As shown in Figures 2 and 4, other panels 20 are coupled to the uprights 4 by way of hinges 23 so as to be rotatable and define respective doors 24. Between each door 24 and the support frame 3 there are one or more locks 25 and, preferably, a repulsion device 26. The repulsion device 26 is, for example, of a magnetic type and tends to reject and therefore open the door 24 if the lock 25 does not correctly close the door 24.

The door 24 has a vertical inner face 27 (Fig. 6), which faces the machine 2 and, when closed, rests against a seal 28. The seal 28 is arranged near the side edges 21c and the upper edge 21a and is supported by a frame 29 (partially shown), which has a reversed U-shape and is coupled with two successive uprights 4 and to the above crossbar 6. The frame 29, with its seal 28, is however, only an optional.

As shown in Figure 6, the lower edge 21b is spaced apart from the floor 5, so as to facilitate the cleaning of the floor 5. Simultaneously, along the lower edge 21b the face 27 does not rest upon any seal or shoulder, so that cleaning fluids, which are sprayed on the panel 20, can freely drain. Possibly, the space between the lower edge 21b of the panels 20 and the floor 5 can be enclosed by a perimeter band, made for example of steel or silicone, in order to pressurize the atmosphere within the protective structure.

As seen in Figure 3, each crossbar 6, at its ends, comprises respective walls 30 defined by vertical plates, which are fixed to respective walls 31 defined by respective sides of the uprights 4. Each crossbar 6 also comprises a tubular bar 32, whose end edges are welded to the walls 30.

The walls 30 may form an angle other than 90° with the axis of the tubular bar 32, in order to misalign different successive crossbars 6, i.e. form angles of the support frame 3 at the uprights 4.

Screw and nut-screw fastening devices 33 are provided to connect some of the components of the device 1. The following discussion refers to the cross section of Figure 5, which shows one of the devices 33 connecting the walls 30, 31, but the same considerations equally apply also to other connecting points.

The device 33 comprises an insert 34, which engages a hole 35 of the wall 30, is fixed by plastic deformation at the edge of the hole 35, and comprises a rear end portion 37, housed in the internal cavity of the crossbar 6 and having a threaded hole 38 so as to define a nut-screw.

The insert 34 also comprises a collar 39 coupled to the edge of the hole 35; a projection 40 that protrudes radially outwards with respect to the portion 37 and leans against the inner face of the wall 30; and a flange 41, which protrudes radially outwards with respect to the collar 39, leans against the outer face of the wall 30 and defines the entrance 42 of the threaded hole 38. The projection 40 is formed during the assembly through a plastic deformation, which allows to pinch the edge of the hole 35 between the projection 40 and the flange 41. In particular, the undeformed insert 34 (partially shown in dashed line) is axially inserted into the hole 35 to engage the collar 39, and then the projection 40 is formed by axially pulling outwards the portion 37 by way of a specific tool (not shown), which uses, as a tie rod, a threaded stem (not shown) screwed into the threaded hole 38.

Preferably, the collar 39 and the edge of the hole 35 has a polygonal perimeter, for example hexagonal, and are complementary to each other.

The device 33 also comprises a screw 43, whose stem 44 engages a hole 45 of wall 31 and is screwed into the threaded hole 38, in order to keep the wall 31 axially in contact against the flange 41.

The flange 41 is surrounded by a seal 46. In particular, the seal 46 is part of a single sealing element 47 (Fig. 3), in common for all the inserts 34 which are fixed to the wall 30 to connect the corresponding wall 31. Therefore, the sealing element 47 has a plurality of holes 48 respectively engaged by flanges 41. The seals 46 are compressed between the walls 30, 31 so as to assume the same thickness of the flanges 41: the seal between the walls 30, 31 around the holes 35, 45 has a consistent and guaranteed quality, as the flanges 41 define a stop for the tightening of the screws 43 and the compression of the seals 46.

As for the coupling of each hinge 23 to respective upright 4, as shown in figure 4 are preferably provided two screws 43a. In particular, each hinge 23 comprises: a body 49 fixed by the screws 43a to the wall 14 of the upright 4; a body 50, which is hinged to the body 49 by way of a pin 51, and a stud 53, which is fixed by way of a screw 54 to the body 50 and is tightened by screws 55 against a portion 56 perforated of the panel 20. Preferably, the hinge 23 has stop shoulders 57, which define the minimum angle between the bodies 49, 50 and therefore the maximum angle of opening of the door 24.

The screws 43a engage a vertical slot 58 and, before being tightened, can slide in the slot 58, to adjust the position in height of the hinge 23 with respect to the upright 4. Similarly, the body 50 has an horizontal slot 59 in which the screw 54 can slide before its tightening to adjust the horizontal position of the door 24 with respect to the upright 4.

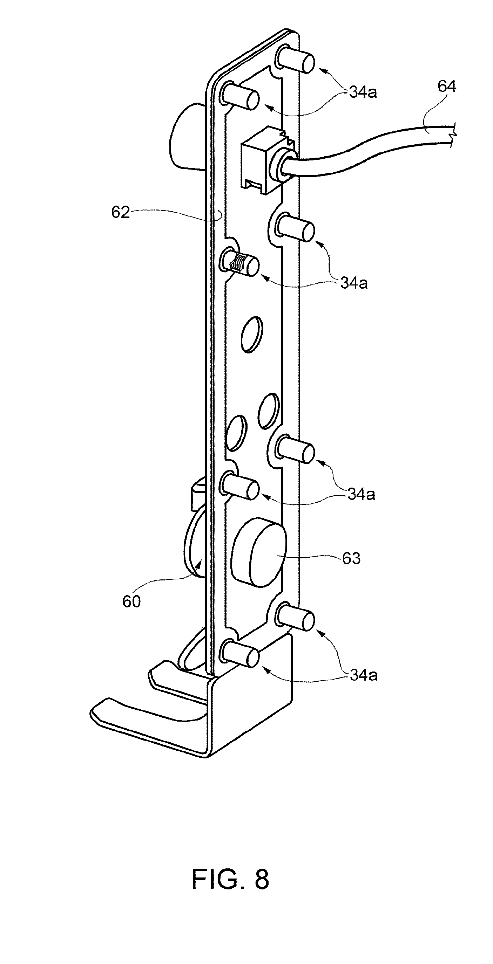

Figure 8 shows a control panel or push-button panel 60 coupled to the wall 14 of an upright 4 by way of inserts 34a, which are fixed by plastic deformation to the wall 14, are housed in the upright 4, but are devoid of flanges 41. The push-button panel 60 is arranged in correspondence to an opening (not shown), which is made in the wall 14 and is engaged by a rear side 63 of the push-button panel 60 and/or by cables 64 which start from the push-button panel 60 and enter into the cavity 11. Such opening is surrounded by a sealing element 62 which has annular shape and ensures the seal between the periphery of the push-button panel 60 and the wall 14.

With reference to Figures 2 and 6, the cables 18 pass also outside of the device 1 in front of the crossbars 6, substantially at the same height of the cable-guide devices 15. In particular, the cables 18 rest on horizontal supports 65, e.g. on grids, which are coupled by brackets 66 to the crossbars 6. The brackets 66, at their ends, support a vertical shelter 67 which faces, and is spaced apart from, the crossbar 6 and prevents the fall of the cables 18 from the supports 65.

Again with reference to Figure 6, the cables 18, 64 can reach the machine 2 by means of arms 8, as the latter are tubular and define internal passageways 68 that lead to cavities 11, as the rear walls 69 of the tubular bars 10 have respective openings 70, which coincide with the entrance of the passageways 68. In this way, the arms 8 do not only play a support function and a function of spacer between the uprights 4 and the machine 2, but also a cable-guiding function.

The openings 70 are surrounded by the sealing elements 62a having an annular shape and in this case provide the seal between the arms 8 and the corresponding uprights 4.

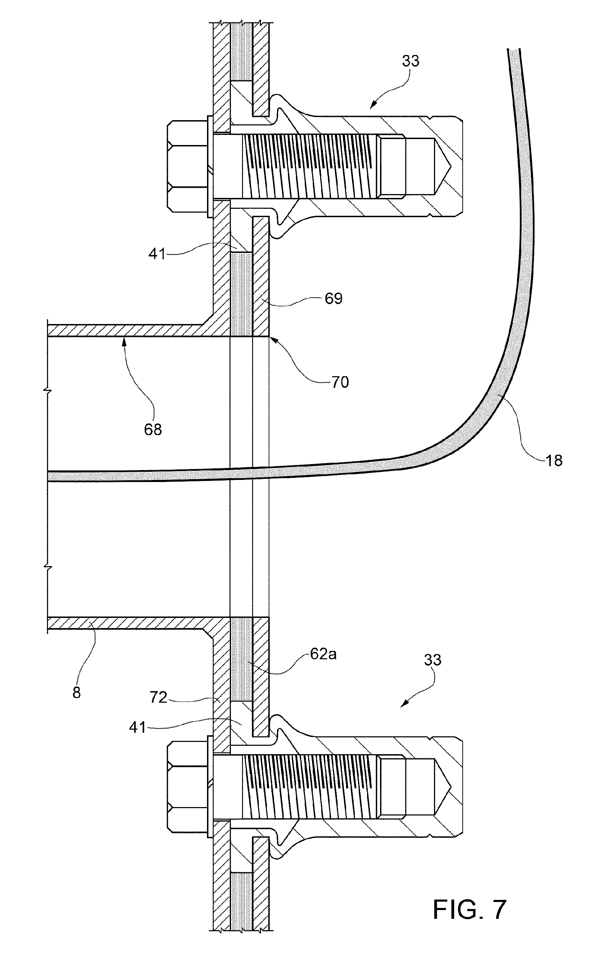

The arms 8 are horizontal and extend radially with respect to a vertical axis of the machine 2. At one end, the arms 8 are fixed to a frame of the machine 2, and at the opposite end they have respective flanges 72, which are fluid-tightly fixed by way of devices 33 to the walls 69 (Figure 7).

Preferably, for the uprights 4 that are connected to the arms 8, the wall 14 has an opening 73, which is horizontally aligned with the opening 70 and is hermetically closed by a door 74 (schematically shown). The door 74 is movable so as to be removed or opened to allow an operator to access the cavities 11 and at the entrance of passageways 68 during the installation and/or maintenance of the cables 18.

From the foregoing it is evident that the devices 33 allow to prevent, or at least limit, the welding of connecting elements to secure components to the crossbars 5 and to upright 4 and/or to connect one another the various pieces of the support frame 3. The assembly of the device 1 is therefore fast and relatively inexpensive. At the same time, the devices 33 with their seals 46 provide an effective seal of fluid between the outside and the inside of the uprights 4, therefore it is possible to use the inside of the uprights 4 for the passage of the cables 18, and/or to house within the uprights 4 and the crossbars 5 any electrical/electronic components (e.g., the back part 63 of the push-button panel 60).

As mentioned above, the arrangement of the seals 46 allows to always have the same quality of seal around the holes 35, and a high coupling accuracy. At the same time, with the sealing element 62a it is possible, with a single piece, to seal also around opening 70.

It is evident then how the passage of cables 18 within the support frame 3 allows to free space outside, thus facilitating the cleaning of the area around the machine 2. Also, making safer and reliable any electrical connections between the cables 18 within the support frame 3, as such connections are not affected by the cleaning liquids.

Moreover, the particular configuration of the hinges 23 helps to simplify the installation and to provide a more precise positioning of the doors 24.

From the foregoing it appears, then, evident that to the described protection device 1 changes and variations can be applied that do not go beyond the protective scope of the present invention, as defined in the appended claims.

In particular, the interior of the support frame 3 could be used for the passage of pipes, in combination or as an alternative to cables 18, 64, and/or the plastic deformation of the inserts could be performed in a different way to that described, for their fastening to the walls of the uprights 4 and/or crossbars 6.

The device 1 may not completely surround the machine 2.

## Claims

1. A machine protection device (1), in particular for a container handling machine (2), comprising:
a support frame (3) comprising a plurality of uprights (4) resting on the ground and spaced one form the other, and a plurality of crossbars (6) connected to the upper ends (7) of said uprights (4);
a plurality of vertical panels (20) supported by said support frame (3) and arranged between said uprights (4);
a plurality of connecting devices (33) comprising fastening members (34) fixed to said uprights (4) and/or to said crossbars (6);
**characterized in that** at least one of said fastening members is defined by an insert (34), which is fixed by plastic deformation to an upright or crossbar, has a threaded hole (38) and comprises a flange (41) resting against an outer surface of said upright or crossbar; a seal (46) being provided around said flange (41) and being compressed in order to have the same thickness of said flange (41).

2. The device according to claim 1, **characterized in that** said insert (34) comprises a projection (40), which rests against an inner face of said upright or crossbar and is made by plastic deformation, so as to form a rivet with said flange (41).

3. The device according to claim 2, **characterized in that** said insert (34) comprises a collar (39) axially arranged between said projection (40) and said flange (41) and coupled to the edge of a hole of said upright or crossbar; said collar (39) and said edge having a complementary polygonal perimeter.

4. The device according to anyone of the previous claims, **characterized in that** said upright or crossbar comprises a tubular bar (10,32); and **in that** said threaded hole (38) is made in a portion (37), which is housed in said tubular bar (10, 32).

5. The device according to claim 4, **characterized in that** said tubular bar (10) defines an inner vertical cavity (11) and has at least one first opening (15, 70) for the inlet/outlet of cables and/or pipes; sealing means (16,62,62a) being associated with said first opening (15, 70).

6. The device according to claim 5, **characterized in that** said first opening (15) is engaged by a cable-guide device (16) which defines said sealing means.

7. The device according to claim 5, **characterized in that** said sealing means (62a) surround said first opening (70) and comprise said seal (46).

8. The device according to any one of claims 5 to 7, **characterized in that** said support frame (3) also comprises at least one tubular arm (7), comprising a first end fixed to said tubular bar (10) and a second end adapted for being fixed to said machine (2); said tubular arm (7) defining an internal passage (68) for said pipes and/or cables.

9. The device according to claim 8, **characterized in that** said internal passage (68) and said inner vertical cavity (11) communicate directly with each other.

10. The device according to claim 9, **characterized in that** said tubular bar (10) has a second opening (73), made on a wall (14) opposite to said tubular arm (7), substantially aligned with said internal passage (68), and hermetically closed by a door (74), which is movable to allow access to said internal vertical cavity (11).

11. The device according to anyone of claims 7 to 9, **characterized in that** the first end is defined by a flange (72) fixed to said tubular bar (10) by means of said inserts (34).

12. The device according to anyone of the previous claims, **characterized in that** some of said vertical panels (20) define respective doors (24) and are coupled by hinges (23) to said uprights (4); said hinges (23) comprising respective horizontal slots (59) for adjusting the horizontal position of said doors (24) with respect to said uprights (4).

13. The device according to claim 12, **characterized in that** said hinges (23) comprise respective vertical slots (58) for adjusting the height position of said hinges (23) with respect to said uprights (4).

14. A machine protection device (1), in particular for a container handling machine (2), comprising:
a support frame (3) comprising a plurality of uprights (4) resting on the ground and spaced apart one from the other, and a plurality of crossbars (5) connected to the upper ends (6) of said uprights (4);
a plurality of vertical panels (20) supported by said support frame (3) and arranged between said uprights (4); said uprights (4) comprising respective tubular bars (10) defining respective vertical inner cavity (11); **characterized in that** at least some of the tubular bars (10) have at least one first opening (15, 70) for the inlet/outlet of cables and/or pipes; sealing means (16,62,62a) being associated with said first opening (15, 70).

15. The device according to claim 14, **characterized in that** said first opening (15) is engaged by a cable-guide device (16) defining said sealing means.

16. The device according to claim 14, **characterized in that** said sealing means (62,62a) surround said first opening (70).

17. The device according to anyone of claims 14 to 16, **characterized in that** said support frame (3) also comprises at least one tubular arm (7), comprising a first end fixed to said tubular bar (10) and a second end adapted for being fixed to said machine (2); said tubular arm (7) defining an internal passage (68) for said pipes and/or cables.

18. The device according to claim 17, **characterized in that** said internal passage (68) and the inner vertical cavity (11) of said tubular bar (10) communicate directly with each other.

19. The device according to claim 18, **characterized in that** said tubular bar (10) has a second opening (73), made on a wall (14) opposite to said tubular arm (7), substantially aligned with said internal passage (68), and hermetically closed by a door (74), which is movable to allow access to said internal vertical cavity (11).
